# EUROPEAN PATENT SPECIFICATION

(11) **EP 0 667 832 B1**
(45) Date of publication and mention of the grant of the patent: **04.09.1996**
(21) Application number: 93924629.4
(22) Date of filing: 09.11.1993
(51) Int. Cl.: B65G 53/16, B01J 8/24, F23C 11/02

(54) **METHOD AND APPARATUS FOR TRANSPORTING SOLID PARTICLES FROM ONE CHAMBER TO ANOTHER CHAMBER**
VERFAHREN UND VORRICHTUNG ZUM TRANSPORT VON FESTEN PARTIKELN ZWISCHEN RÄUMEN
PROCEDE ET APPAREIL UTILISES POUR TRANSPORTER DES PARTICULES SOLIDES D'UNE CHAMBRE A UNE AUTRE

(30) Priority: 10.11.1992 US 973396; 26.05.1993 US 66277
(43) Date of publication of application: 23.08.1995
(73) Proprietor: Foster Wheeler Energia Oy, 00440 Helsinki (FI)
(72) Inventor: HYPPÄNEN, Timo, FIN-48710 Karhula (FI)
(74) Representative: Görg, Klaus, Dipl.-Ing.
(86) International application number: FI9300464
(87) International publication number: WO9411284

(56) References cited:
- EP-A- 0 097 267
- GB-A- 1 508 777
- US-A- 5 040 492

## Description

The present invention refers to a novel method and an apparatus for transporting solid particles from one chamber having solid particles therein into another chamber, for providing a solid flow seal, a controllable solid flow valve, or both, in e.g. a fluidized bed system.

The present invention especially relates to a method and an apparatus for transporting solid particles between two chambers in a bubbling or circulating fluidized bed systems. In fluidized bed reactors solid material may e.g. be transported from the reactor chamber to adjacent processing chambers for heat recovery, particle separation, chemical or other processing. In circulating fluidized bed reactors, on the other hand, bed material is continuously recycled from a return duct (chamber) into the lower part of the reactor chamber.

Fluidized bed reactors are e.g. used in a variety of different combustion, heat transfer, chemical or metallurgical processes. Depending on the process different solid bed materials are fluidized and/or circulated in the systems. In combustion processes particulate fuel such as coal, coke, lignite, wood, waste or peat, as well as other particulate material such as sand, ash, sulfur absorbent, catalyst or metal oxides can be constituents of the fluidized bed.

Internal or external circulation or transportation of solid particles in fluidized bed systems takes place from one chamber having a higher pressure to another chamber having a lower pressure or from a chamber having a lower pressure to a chamber having a higher pressure. In transportation from a higher pressure to a lower pressure particles are forced to flow by the pressure difference between the two chambers, whereas in transportation from a lower pressure to a higher pressure it is known to transport particles by mechanical means, such as screw transporters, or by non-mechanical means, e.g. by using transportation gas.

Mechanical transporters are less reliable in hot surroundings, such as fluidized bed combustors, due to rapid erosion and clogging tendency.

When using non-mechanical means, for transporting solid particles from a chamber having a lower pressure to a chamber having a higher pressure, a gas seal or a gas lock must be provided between the chambers, in order to prevent non-desired flow of gas from the chamber having the higher pressure to the chamber having the lower pressure.

It is well known, as shown in US patent 5,069,171, to arrange a loop seal (J-valve) type of gas lock in the return duct of a circulating fluidized bed reactor (CFB). The sealing effect is achieved thereby by preventing the loop seal from becoming empty and by maintaining a high enough layer of solid material in the loop seal. Circulating bed material accumulated in the loop seal provides a pressure high enough to prevent gases from flowing from the reactor chamber at a high pressure through the return duct into the particle separator at a lower pressure. Solid material is allowed to flow by gravity from the loop seal into the reactor chamber or is transported from the loop seal by fluidizing air introduced therein.

Other types of gas seals are also known to be used in return ducts of CFB reactors. A seal pot type of gas seal is shown in US patents 4,896,717 and 4,915,061, where circulating bed material is guided from the particle separator through a return duct into a seal pot connected to the reactor chamber. The solid-material accumulated in the seal pot prevents gas from flowing from reactor chamber into the return duct. Solid material is transported by fluidizing gas and overflow from the seal pot into the reactor chamber.

Another type of gas seal, a so called "L-valve type" of gas seal, is shown in US patent 4,538,549, in which the return duct in a CFB reactor is connected to the lower part of the reactor chamber through a rather lengthy horizontal duct. Circulating bed material is accumulated in the horizontal duct, preventing gas from flowing from the reactor chamber at a high pressure into the return duct at a lower pressure. Solid particles are transported by transporting gas through the horizontal duct into the reactor chamber. Known L-valve constructions have very long horizontal ducts with large cross sections. The ducts have to be long in order to build up enough particles in the duct to prevent gases from flowing therethrough into the return duct.

For providing efficient gas seals with the aforementioned known types of gas seals (large space consuming loop seal constructions, seal pots, or L-valves) large amounts of circulating bed material are necessary. Further, when hot bed material is circulated in the return duct of a circulating fluidized bed system, complicated supports, heat seals, insulation arrangements and joints are needed in the gas seal constructions for preventing damages caused by temperature differences in the gas seal during start ups and shut downs. Less space consuming, less vulnerable and less expensive gas seals are needed, especially in cooled structures.

EP-A-0 097 267 (nearest prior art) discloses a fluidised bed apparatus focusing into controlling heat transfer through a heat exchanger wall by adjusting fluidization in the bed section adjacent to the wall. It suggests a division of a fluidized bed of solids into two sections and to use the other bed section for effecting on heat transfer from the solids to the heat exchanger wall. The division is established by arranging superimposed louvres at a distance from the heat exchange wall. According to EP-A-0 097 267, the heat transfer may be controlled by varying the rate of fluidization of solids in the bed section between the heat exchanger wall and the superimposed louvres. This effects on the mixing or circulation of the bed material within the whole bed i.e. mixing of particles through the superimposed louvres back and forth between two sections of the fluidized bed. It also suggests that combustion takes place in the main portion of the bed and the bed temperature is controlled by controlling the intermixing of particles between the main bed portion and the portion defined by the heat exchanger wall and the louvres.

According to the invention, a method and an apparatus for transporting solid particles from a first chamber having a bed of particles therein into another chamber is provided in which the above mentioned drawbacks are minimized. The invention also provides an improved gas seal arrangement between two chambers in a fluidized bed systems, an improved solid flow valve arrangement between two chambers in a fluidized bed systems, and an improved method for controlling the transportation of solid particles from one chamber into another chamber in a fluidized bed system.

According to the present invention there is provided a method for transporting solid particles from a first chamber having solid particles therein into an adjacent second chamber, the two adjacent chambers being separated by a partition wall having several narrow passages disposed in the wall, interconnecting the chambers
the method comprising the steps of:
(a) introducing transporting gas into the first chamber, and transporting solid particles as multiple solid flows from the first chamber to the second chamber through the passages in the partition wall,
(b) while practising the step (a), preventing backward flow of gases and solid particles from the second chamber back to the first chamber through the passages, having height (h) to length (l) ratio (h/l), in the partition wall, and establishing a solid flow seal, and/or a controllable solid flow valve, in the passages (42a - 42f, 122, 230) on the partition wall by providing the ratio (h/l) to be less than the tangent of an angle α, wherein the angle α is the maximum angle of a heap of the solid particles at which the particles can be gathered without solids spreading out or sliding downwards along the sides of the heap.

In many applications the height to length ratio h/l is less than about 0.5.

The solid flow seal effect of a passage depends on the ratio h/l. The ratio h/l should, according to one preferred embodiment of the invention for horizontal passages, be less than 0.5 in order to prevent solids from flowing uncontrollably through the passages and for keeping a high enough solid surface level in the first chamber to prevent gas from flowing backwards through the passages. The smaller the vertical extension (h) the shorter passage can be used.

The cross section of the passages taken in the plane of the partition wall are preferably rectangular slot like, but passages having square or round cross sections may be preferable in some applications.

The passages can be made inclined having outlet ends on a higher level than inlet ends for preventing coarse material from accumulating at the inlet end of the passages. In inclined passages, the length (l) of the passage can be further decreased compared to horizontal passages having the same cross section. In some applications the passages may be only partly inclined, so that their bottom is inclined whereas the upper border area is horizontal. It is also possible to make the passages inclined in one direction at their inlet ends and inclined in an other direction at their outlet ends. The cross section of the passages would then have a V-form or an inverted V-form. In some applications a step wise ascending or descending cross section may be used.

The inlet side of the passages may be throttled in order to prevent particles large enough to clog the passages from entering them. Alternatively the passages may be funnel shaped with a diameter increasing towards the outlet side.

According to another preferred embodiment of the invention there are provided in a partition wall between two chambers several slot like passages or openings formed on top of each other in a frame like construction. The chambers being e.g. a chamber in the lower part of a return duct, a combustion chamber in a fluidized bed combustor or a heat exchanger chamber connected to the combustion chamber. The several slot like passages provide several separate passages for solid flows through the partition wall. The total vertical extension hₜₒₜ needed for an imaginary single large passage can according to one important aspect of the invention thereby be divided into several vertical extensions h₁, h₂, h₃, ..., each divided vertical extension being just a fraction of the total hₜₒₜ needed. The total cross sectional area of the passages is determined by the mass flow needed, e.g. for heat transfer in an internal or external heat exchanger.

It is further an important aspect of the present invention that the length (l) of each passage can be decreased in the same proportion as the vertical extension is decreased, without the sealing effect of the passage being decreased. According to one practical aspect of the present invention short passages, only long enough to extend through a common membrane wall, can be used for transporting particles from one chamber to another, while simultaneously providing a solid flow seal.

Short passages according to the present invention may easily be included in common water tube walls or membrane walls. The passages may be formed in the fins combining tubes in the wall. The passages may be arranged in the wall in gill like configurations, i.e. "gill seals", combined in a prefabricated frame.

The present invention provides an improved solid flow seal which is small and can easily be included in existing reactor constructions. The new seal minimizes the need for complicated joints, heat insulations or supports.

The present invention also provides a method for controlling solid flow from the first chamber into the second chamber. The transporting gas transporting solids through the passages into the second chamber may be introduced through nozzles or openings in the bottom of the first chamber or/and through nozzles or openings at different levels in a side wall preferably opposite to the partition wall. By controlling the flow of transporting gas through different nozzles at different levels and locations it is possible to control the amount of solids flowing through the passages. Transporting gas introduced through nozzles in the bottom of the first chamber transports solid particles through all passages in the partition wall, whereas transporting gas introduced through nozzles higher up, on a side wall, primarily transports solid particles through passages higher up in the first chamber. Nozzles disposed too close to the passages transports less solid material than nozzles disposed at a significant distance from the passages. The amount of solids transported through the passages may, of course, also be controlled by the amount of transporting gas introduced.

By utilizing the present invention it is thereby possible to control the amount of solid particles circulating from the first into the second chamber, e.g from a return duct into the reactor chamber or from a combustion chamber into a heat exchanger chamber.

Air from the fluidized bed reactor windbox or air from a separate blower, preferably at a slightly higher pressure, or some other cheap gas, e.g. recycled flue gas, may be used as transporting gas. Inert gases could also be used especially if inert, non-oxidizing conditions are needed.

According to one embodiment of the invention are bed particles in a fluidized bed combustor transported from the combustion chamber directly or through a by-pass chamber into an adjacent heat exchanger chamber through narrow slot like passages or channels, which are arranged in a gill-like formation, in a partition wall separating the heat exchanger chamber or when using a by-pass chamber the by-pass chamber from the combustion chamber. Particle flow through the passages, and thereby heat recovery in the heat exchanger, is controlled by controlling the introduction of transporting gas guiding particles through the passages into the heat exchanger or by-pass chamber. Particles may be recycled through the wall separating the heat exchanger chamber from the combustion chamber with transporting gas and overflow arranged in the upper part of the heat exchanger chamber or through another set of slot like passages or channels in the lower part of the heat exchanger chamber.

According to another embodiment of the present invention circulating bed particles in a circulating fluidized bed (CFB) reactor are reintroduced into the reactor chamber from the return duct through "gill seal" passages provided in the lower part of the return duct. A bed of circulating particles is formed in the return duct. The bed moving slowly downwards as solid material therefrom is reintroduced into the combustion chamber, new solid material being continuously added on top of the bed. The height of the bed may be controlled by controlling the transporting gas flows reintroducing solid material through the "gill seal" passages from the return duct into the combustion chamber.

The present invention also provides a self control system, when bed levels in the return duct are too low, transporting gas tends to flow upwards through the bed to the upper part of the return duct without transporting solid particles through the passages. This leads to an increase of bed material in the return duct. Thereafter at a certain bed level transportation gas is prevented by the height of the bed to flow upwards through the bed and starts to flow through the passages and to transport solid particles through the passages.

The present invention also provides a method in a CFB reactor for recycling solid material from the return duct to one or several different relatively high levels in the reactor chamber. The passages according to the present invention provides efficient seals preventing gas from flowing into the return duct. Earlier known technology loop seals and L-valves would be more complicated and space consuming and unsuitable to be used in the upper parts of a CFB reactor.

According to still one embodiment of the invention there is provided an apparatus for transporting solid particles from a first chamber having solid particles therein
to an adjacent second chamber, the two adjacent chambers being separated by a partition wall having a passage interconnecting the chambers, the apparatus comprising gas inlet means, for introducing transporting gas into the first chamber, two or more passages in said partition wall, one on top of the other having height (h) to length (l) ratio (h/l) less than the tangent of an angle α, wherein the angle α is the maximum angle of a heap of the solid particles at which the particles can be gathered without solids spreading out or sliding downwards along the sides of the heap, a solid flow seal, a controllable solid flow valve, or both provided by the passages in said partition wall interconnecting said chambers.

Horizontal passages according to the invention preferably have a height (h) to length (l) ratio (h/l) less than 0.5. The narrow passages disposed in the partition wall may be of a size which allows only particles of a predetermined size or smaller to flow from the first chamber to the second chamber. The passages thereby preventing larger objects from flowing from e.g. a combustion chamber into a heat exchanger connected thereto or preventing large ash particles from flowing from a return duct into a combustion chamber. Maximum size of passages having round or square cross sections could be about 50 mm in diameter. Passages having horizontal slot like cross sections would preferably have maximal vertical extensions of about 50 mm. The maximum size used depending on the material to be processed in the fluidized bed.

It is the primary object of the present invention to provide an efficient and effective solid flow seal and control valve for use with fluidized beds or the like, which has a simple construction. This and other objects of the invention will become clear from an inspection of the detailed description of the invention and from the appended claims.

### BRIEF DESCRIPTION OF THE DRAWINGS

- FIG. 1: is a schematic isometric cross section through a circulating fluidized bed apparatus according to one exemplary embodiment of the invention;
- FIG. 2: is a partial enlarged cross section of the lower part of the return duct and the "gill seal" passages in FIG. 1 ;
- FIG. 3: is a schematic cross sectional view of the lower part of a fluidized bed combustion chamber according to another exemplary embodiment of the present invention;
- FIG. 4: is a schematic isometric view, with the side walls cut away for clarity of illustration, of an exemplary by-pass chamber and heat exchanger chamber connected to a combustion chamber according to the present invention, and
- FIG. 5: is a schematic cross sectional view of the lower part of a circulating fluidized bed reactor according to still another exemplary embodiment of the present invention.

### DETAILED DESCRIPTION OF THE DRAWINGS

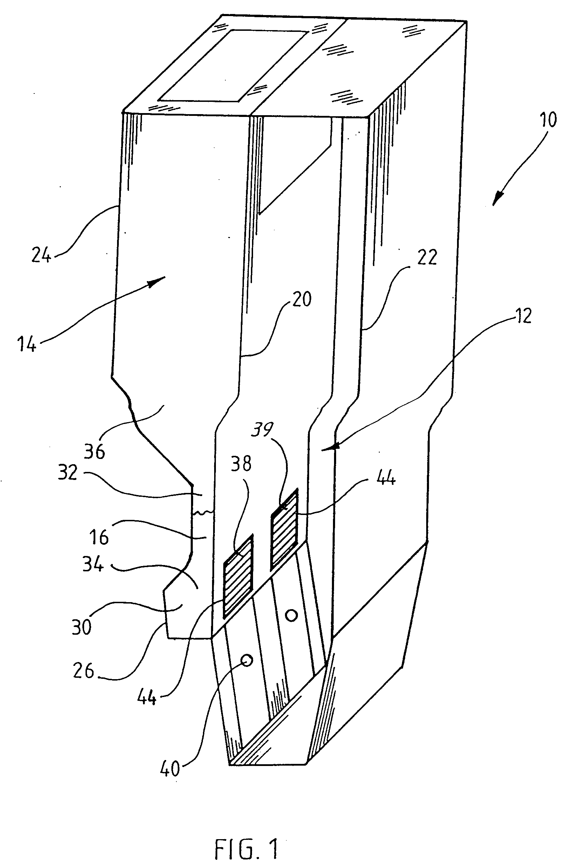

FIG. 1 shows a circulating fluidized bed combustor 10, having a combustion chamber 12 designed to have an expanded fluidized bed of particles therein. A particle separator 14 is connected to the upper part of the combustion chamber 12, for separating particles entrained with the mixture of flue gases and solid material being discharged from the combustion chamber through duct 13. A return duct 16 is provided for recirculating separated solid material from the separator into the lower part of the combustion chamber 12.

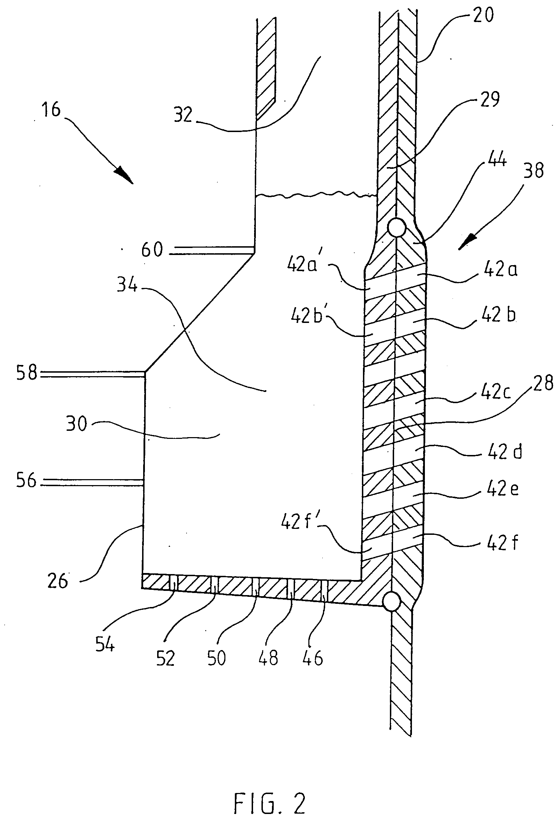

The walls 20, 22, 24, 26, 28 of the combustion chamber 12, the separator 14 and the return duct 16 are preferably constructed of water wall panels or membrane panels protected partly by a refractory lining 29, as shown in Fig. 2.

The lower part 30 of the return duct 16, as shown in Fig. 1 and Fig. 2, has a larger horizontal cross section than the upper part 32 of the return duct 16. A bubbling bed 34 of recycling particles is provided in the lower part 30. A gas space 36 extends from the bed 34 to the particle separator 14. Inlets 38 and 39 for recycling bed material from the return duct 16 into the combustion chamber 12 are disposed in the lower part 30 of the combustion chamber.

Fuel inlets 40 are disposed mainly beneath the inlets 38, 39, so that fuel and recycled particles are immediately mixed, when introduced into the combustion chamber 12. Fuel may be introduced into the lower part 30 of the return duct 16 if desired.

Heat transfer surfaces, such as a superheater surfaces, not shown in the drawings, may be provided in the bubbling bed 34 between the two inlets 38 and 39 in a heat transfer zone.

The inlets 38, 39 preferably comprise narrow slot like inlet passages 42a, 42b,.. 42e, 42f (see Fig. 2) disposed one on top of the other in a frame like structure 44 connecting the lower part 30 of the return duct 16 with the lower part of the combustion chamber 12. Each of the passages 42a-42f preferably have a height (h) to length (l) ratio (h/l) of less than 0.5, and typically h < 50 mm. As illustrated in Fig. 2, the passages 42a-42f preferably slant upwardly slightly from duct 16 to chamber 12, e.g. about 10-20 degrees (about 15 degrees in Fig. 2).

The material of bed 34 in the return duct 16 covering the inlet passages 42a - 42f and the solid flow inside the inlet passages 42a - 42f constitute in combination a gas seal, preventing combustion chamber gases from flowing from the combustion chamber 12 at a high pressure p₁ through the passages 42a - 42f and the bed 34 into the gas space 36 at a lower pressure in the upper part 32 of the return duct 16.

Transporting gas (e.g. air, inert gas, recycled flue gas or the like) may be introduced into the lower part 30 of the return duct 16 through bottom gas inlets 46, 48, 50, 52 and 54 (Fig. 2). The gas inlets can be of any suitable type of nozzles, such as the type commonly used in fluidized beds.

The exclusive or additional, transporting gas may be introduced through upper gas inlets 56, 58 and 60 (Fig. 2). Transporting gas introduced through bottom gas inlets 46 - 54 transports particles from the lowermost and upper parts of the bed 34 towards inlet passages 42a - 42f. Transporting gas introduced through nozzle 56 transports more particles than transporting gas introduced through nozzle 58, which transports solid material mostly through the uppermost of the inlet passages 42a - 42c, e.g. gas may at low loads be introduced mainly through the uppermost nozzle 60, for transporting only small amounts of solids and maintaining a suitable bed level in the return duct 16.

By controlling the transporting gas flows through different nozzles 46 - 60, optimal solids flow can be established through all inlet passages 42a - 42f, at varying process conditions, for recycling desired amounts of the material of bed 34 through the passages 42a - 42f into the combustion chamber 12 and simultaneously securing an efficient solid flow seal in said passages during varying process conditions, e.g. preventing the bed level from decreasing below a level which would allow gas to flow from the combustion chamber 12 through the passages 42a - 42f into the return duct 16. The gas seal effect of the bed itself is kept at a suitable level. Control of the transporting gas flows also controls the valve action of the passages 42a - 42f.

With a high load of bed material being recycled through the return duct, transporting gas can be introduced through all or nearly all nozzles 46 to 58 in order to entrain maximal amounts of solid particles with the transporting gas for transportation through passages 42a - 42f. At low load conditions, only small amounts of bed material has to be transported through the passages 42a - 42f. This may be done by introducing the transporting gas mainly through nozzles 54 - 60, whereby the bed 34 portion closest to inlet passages 42e and 42f, as well as, closest to nozzles 46 - 52 is affected very little by the transporting gas, which leads to decreased amounts of bed material being recycled through the passages 42a - 42f. If there is a low bed 34 level transporting gas introduced through nozzles 60 and 58 may flow up into the gas space 36 of the return duct without transporting bed material at all.

Care must, however, be taken to ensure that a solid flow seal is established in the passages. A gas seal can in some cases be established, especially in the lowermost passages 42e and 42f, by filling up the passages with solid particles. An actual flow of particles through the passages 42a - 42f is not necessary in order to achieve a gas seal if there is a high enough level of solids in the return duct to prevent gases from flowing therein.

In a heat transfer zone between solid flow seal zone inlets 38 and 39 fluidizing gas may be introduced through nozzles for controlling the heat transfer and for transporting solid material at desired velocity from the heat transfer zone towards the inlets 38 and 39.

The frame structure 44 as shown in FIG. 1 and 2 can easily be inserted in a conventional tube wall or membrane wall, such as wall 28. The frame 44 and the slot like inlet passages 42a - 42f therein can be prefabricated into the wall 20 when covering the wall with refractory lining 29. Tubes in the tube wall 20 can be bent (not shown in the drawing) during construction to provide the opening needed for the frame construction 44. A mold, for allowing utilization of the slot like passages 42a - 42f, made of Styrox or other combustible material is inserted in the frame 44 between the tubes, before covering the tube wall 20 with refractory lining 29. The mold is burnt away during heating of the refractory lining 29, leaving only slot like passages or openings 42a'- 42f' aligned with the passages 42a - 42f.

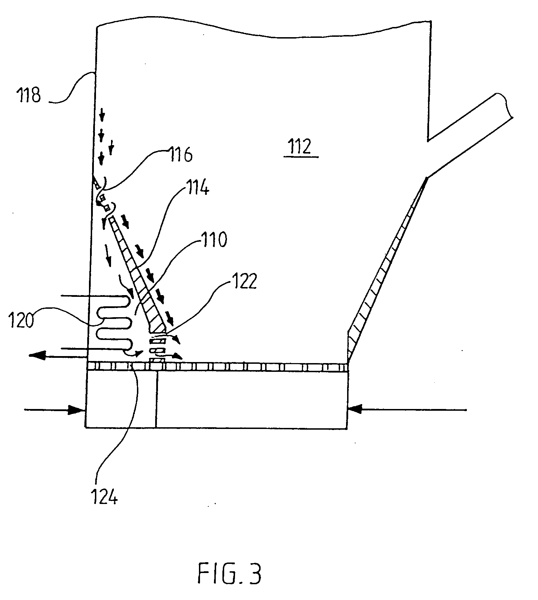

FIG. 3 illustrates a further embodiment of the present invention. In this embodiment a heat exchanger chamber 110 is connected to a reactor chamber 112, for recovering heat from the bed material (not shown) in the reactor chamber 112 by internally recycling bed material through the heat exchanger chamber 110.

The heat exchanger chamber 110 is connected to the inclined refractory lined wall portion 114 of the lower part of the reactor chamber wall 118. Inlet openings 116 are provided in the upper end of the refractory lined wall portion 114. Particles flowing downward along a side wall 118 are captured by the openings 116 and flow into the heat exchanger chamber 110. Liquid circulating heat transfer surfaces 120 are disposed in the heat exchanger chamber 110.

Slot like outlet passages 122 according to the invention are provided in the lowermost part of the refractory lined wall portion 114 for reintroducing particles into the reactor chamber 112. The passages 122 for reintroducing particles into the reactor chamber 112 constitute a solid flow seal. The passages 122 are narrow slots disposed one on top of the other, with each slot forming a separate L-valve.

Transporting gas (e.g.air) is introduced through nozzles 124 in the bottom of the heat exchanger chamber for transporting particles from the heat exchanger chamber into the reactor chamber and for controlling the solid flow seal in the passages 122. Other nozzles (not shown in the drawing) for introducing fluidizing gas may be utilized in heat transfer zones in the heat exchanger chamber 110 for controlling the heat transfer.

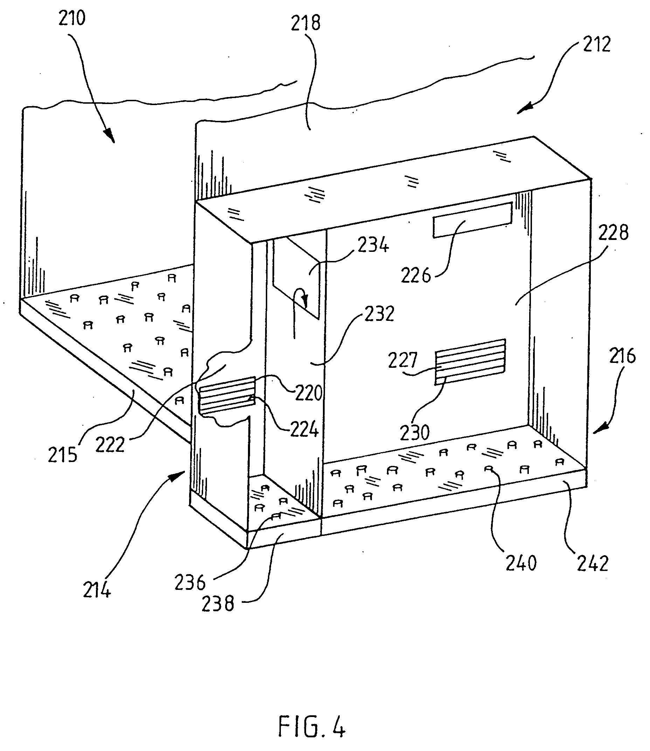

FIG. 4 shows another embodiment of the present invention. The figure shows a part of a reactor chamber 210 in a fluidized bed reactor and a housing 212 disposed adjacent the reactor chamber 210 and including a lifting chamber 214 and a processing chamber 216. The housing 212 is disposed partly back to back with one side wall 218 of the reactor chamber 210. The housing is divided by a wall 232 into the lifting chamber 214 and the processing chamber 216. An opening 234 in the upper part of the wall 232 connects the two chambers 214, 216.

An outlet 220 in the reactor chamber 210 is provided at a first vertical level in the common wall portion 222 between the lifting chamber 214 and the reactor chamber 210. Solid particles flow through the outlet 220 from the reactor chamber 210 into the lifting chamber 214 due to pressure difference between the chambers. Narrow slot like passages 221, forming a "gill seal", according to the present invention, are disposed in the outlet 220 to prevent gas from flowing from one chamber into the other and for preventing objects larger than a predetermined size from flowing from the reactor chamber 210 into the lifting chamber 214.

Air nozzles 236 are disposed in the lifting chamber for pneumatically transporting solid particles through the opening 234 into the processing chamber 216. In the common wall 228 between the reactor chamber 210 and the processing chamber 216, two inlets 226 and 227 are provided for transporting solid particles back into the reactor chamber 210. Transporting gas and solid particles entrained therein flow from the lifting chamber 214 through inlet 226 into the reactor chamber 210.

The second inlet 227, disposed within the bed of solid particles in the processing chamber 216, comprises a narrow slot like passages 230 one on top of the other according to the present invention. Solid particles flow through the passages 230 by gravity or are transported therethrough by the fluidization gas being introduced through nozzles 240. Solid flow seals are established in the second inlet 227 preventing uncontrollable solid flow from the processing chamber 216 into the reactor chamber 210.

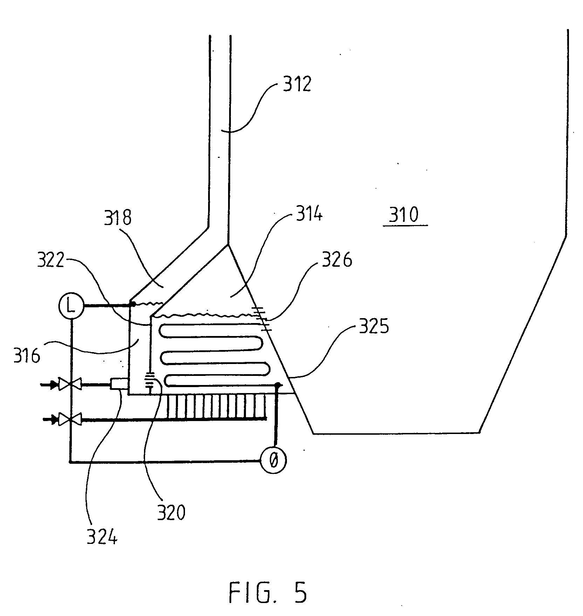

FIG. 5 shows still another exemplary embodiment of the present invention. Fig. 5 shows a reactor chamber 310 in a CFB reactor having a return duct 312 and a heat exchanger chamber 314 connected thereto. A bed 316 of solid particles is accumulated in the lower part 318 of the return duct 312. Solid flow passages 320 according to the present invention are provided in a partition wall 322 between the lower part 318 of the return duct 312 and the heat exchanger chamber 314. Transportation gas is introduced through nozzle 324 into the lower part of the return duct 312 for transporting particles through passages 320 into the heat exchanger chamber 314 and for controlling the flow through solid flow seal established between the return duct and the heat exchanger chamber.

Solid material introduced into the heat exchanger 314 is fluidized therein and recycled into the reactor chamber 310 by overflow through an opening 326. Additional passages, according to the present invention, may also be provided in the lower part of the partition wall 325 between the heat exchanger chamber 314 and the reactor chamber 310 if desired.

## Claims

1. A method for transporting solid particles from a first chamber (30, 110, 216, 314 / 12, 112, 210, 310) having solid particles therein into an adjacent second chamber (12, 112, 210, 310 / 30, 110, 216, 314) the two adjacent chambers being separated by a partition wall (20, 114, 218) having several passages (42a - 42f, 122, 230) disposed in the partition wall, interconnecting the chambers, the method being characterized by the following steps of:
(a) introducing transporting gas into the first chamber, and transporting solid particles as multiple solid flows from the first chamber to the second chamber through the passages in the partition wall,
(b) while practising the step (a), preventing backward flow of gases and solid particles from the second chamber back to the first chamber through the passages, having height (h) to length (l) ratio (h/l), in the partition wall, and establishing a solid flow seal, and/or a controllable solid flow valve, in the passages (42a - 42f, 122, 230) on the partition wall by providing the ratio (h/l) to be less than the tangent of an angle α, wherein the angle α is the maximum angle of a heap of the solid particles at which the particles can be gathered without solids spreading out or sliding downwards along the sides of the heap.

2. A method of transporting solid particles according to claim 1, wherein steps (a) and (b) are practised by introducing solid particles in a fluidized bed system from a bed of solid particles in a first chamber into solid particles in a fluidized state or in pneumatic conveying state in the second chamber.

3. A method of transporting solid particles according to claim 1, wherein step (b) is practised by transporting the particles through narrow passages (42a - 42f, 122, 230) having a height (h) to length (l) ratio (h/l) of less than 0.5.

4. A method of transporting solid particles according to claim 1, wherein step (a) is practised by introducing transporting gas through the bottom of the first chamber, one side wall opposite to the partition wall in the first chamber, or both.

5. A method of transporting solid particles according to claim 1, wherein steps (a) and (b) are practised to transport solid particles from a combustion chamber in a fluidized bed combustor into an adjacent processing chamber having a fluidized bed of particles therein.

6. A method of transporting solid particles according to claim 1, wherein steps (a) and (b) are practised to recycle circulating solid particles in a fluidized bed combustor from an internal heat exchanger chamber having a fluidized bed of solid particles therein into a combustion chamber.

7. A method of transporting solid particles according to claim 1, wherein steps (a) and (b) are practised by transporting solid particles in a circulating fluidized bed combustor from a bed of solid particles in a return duct (16) into the combustion chamber of the combustor.

8. A method of transporting solid particles according to claim 1, wherein step (b) is practised by transporting solid particles as multiple solid flows through horizontally or slightly inclined slot like passages, the passages disposed one on top of the other.

9. A method of transporting solid particles according to claim 1, wherein step (b) is practised by transporting solid particles as multiple horizontal solid flows through passages having a height smaller than about 50 mm.

10. A method of transporting solid particles according to claim 1, wherein step (a) is practised by introducing at least a portion of transporting gas through one side wall opposite to the partition wall in the first chamber.

11. Apparatus for transporting solid particles from a first chamber (30, 110, 216, 314 / 12, 112, 210, 310) having solid particles therein to an adjacent second chamber (12, 112, 210, 310 / 30, 110, 216, 314), the two adjacent chambers being separated by a partition wall (20, 114, 218), the apparatus having gas inlet means for introducing transporting gas into the first chamber,
the apparatus being characterized by
- two or more passages in said partition wall, one on top of the other (42a - 42f, 122, 230) having height (h) to length (l) ratio (h/l) less than the tangent of an angle α, wherein the angle α is the maximum angle of a heap of the solid particles at which the particles can be gathered without solids spreading out or sliding downwards along the sides of the heap,
- a solid flow seal, a controllable solid flow valve, or both provided by the passages in said partition wall interconnecting said chambers.

12. An apparatus according to claim 11 wherein said passages have a height (h) to length (l) ratio (h/l) less than about 0.5.

13. An apparatus according to claim 11 wherein said two or more passages disposed one on top of the other are combined into a joint gill-like configuration in a frame like construction (44) in said partition wall, said passages being horizontal and each having a height less than about 50 mm.

14. An apparatus according to claim 13 wherein two or more of said frame like constructions are disposed side by side, spaced horizontally from each other, in said partition wall.

15. An apparatus according to claim 14 wherein said gas inlet means comprises a plurality of transporting gas nozzles (56 -60) disposed in said first chamber in front of said frame like constructions for transporting solid particles through said passages.

16. An apparatus according to claim 15 further comprising heat transfer surfaces (120) disposed in said first chamber in zones adjacent intervening spaces between said frame like constructions.

17. An apparatus according to claim 11 wherein said two or more passages disposed one on top of the other are combined into a joint gill-like configuration in a frame like construction (44) in said partition wall.

18. An apparatus according to claim 17 wherein said passages have a height (h) to length (l) ratio (h/l) less than about 0.5.

19. An apparatus according to claim 18 wherein said passages make an angle of at least about 10 degrees with respect to the horizontal.

20. An apparatus according to claim 11 wherein said passages make an angle of at least about 10 degrees with respect to the horizontal.

21. An apparatus according to claim 11 wherein said first chamber is a combustion chamber and said second chamber is a processing chamber.

22. An apparatus according to claim 11 wherein said first chamber is a processing chamber and said second chamber is a combustion chamber.

23. An apparatus according to claim 11 wherein said first chamber is a return duct and said second chamber is a combustion chamber.

24. An apparatus according to claim 11 further comprising a third chamber adjacent said first and second chambers, said third chamber being separated from the first chamber by a portion of the same first partition wall separating said first and second chambers, said first partition wall having remote from said first narrow passages interconnecting the first and second chambers two or more narrow passages disposed one on top of the other in said first partition wall interconnecting said first and third chambers for providing a solid flow seal, a controllable solid flow valve, or both; said third chamber further being separated from the second chamber by a second partition wall having a passage interconnecting said second and third chambers; and wherein said first chamber comprises a combustion chamber, said second chamber comprises a transporting chamber and said third chamber comprises a processing chamber.

25. An apparatus according to claim 11 wherein said partition wall within said first chamber is lined with refractory.

26. An apparatus according to claim 25 further comprising two or more narrow passages disposed in said refractory lining lined with said narrow passages in said partition wall.

27. An apparatus according to claim 25 wherein said narrow passages in said refractory lining are made by burning away combustible material in the form of said passages, inserted in the wall before it is covered with refractory lining, the combustible material being burned away during heating of the refractory lining and leaving the narrow passages in the remaining wall.

28. An apparatus according to claim 11 wherein said partition wall is a membrane tube wall, and said two or more passages, one on top of the other are arranged in the membrane wall at location having the tubes bent to provide an opening for said two or more passages.

## Patentansprüche

1. Verfahren zur Beförderung von Feststoffpartikeln aus einer ersten Kammer (30, 110, 216, 314 / 12, 112, 210, 310) mit Feststoffpartikeln darin in eine benachbarte zweite Kammer (12, 112, 210, 310 / 30, 110, 216, 314), welche zwei benachbarten Kammern durch eine Trennwand (20, 114, 218) voneinander getrennt sind, die mehrere Kanäle (42a - 42f, 122, 230) aufweist, die in der Trennwand angeordnet sind und die Kammern miteinander verbinden, wobei das Verfahren durch folgende Schritte **gekennzeichnet** ist:
(a) Einführung von Fördergas in die erste Kammer, und Transport von Feststoffpartikeln in Form von mehreren Feststoffströmen durch die Kanäle in der Trennwand aus der ersten Kammer in die zweite Kammer,
(b) während der Durchführung von Schritt (a) Verhinderung von Rückfluß von Gasen und Feststoffpartikeln aus der zweiten Kammer zurück in die erste Kammer durch die in der Trennwand angeordneten Kanäle mit einem Höhe (h) zu Länge (l) Verhältnis (h/l) und Bildung einer Feststoff-Durchflußsperre und/oder einer regelbaren Feststoff-Durchflußschleuse in den Kanälen (42a - 42f, 122, 230) in der Trennwand, indem das Verhältnis (h/l) kleiner als die Tangente eines Winkels α arrangiert wird, wobei der Winkel α der maximale Winkel eines Haufens aus Feststoffpartikeln ist, bei dem sich Partikel ansammeln können, ohne daß sich Feststoffpartikel ausbreiten oder die Seiten des Haufens hinabgleiten.

2. Verfahren zur Beförderung von Feststoffpartikeln nach Anspruch 1, **dadurch gekennzeichnet**, daß die Schritte (a) und (b) realisiert werden durch Überführung von Feststoffpartikeln in einem Wirbelschichtsystem von einem Bett Feststoffpartikel in einer ersten Kammer in Feststoffpartikel in fluidisiertem Zustand oder pneumatischem Förderzustand in einer zweiten Kammer.

3. Verfahren zur Beförderung von Feststoffpartikeln nach Anspruch 1, **dadurch gekennzeichnet**, daß der Schritt (b) durch Beförderung der Partikel durch schmale Kanäle (42a - 42f, 122, 230) mit einem Höhe (h) zu Länge (l) Verhältnis (h/l) unter 0,5 praktiziert wird.

4. Verfahren zur Beförderung von Feststoffpartikeln nach Anspruch 1, **dadurch gekennzeichnet**, daß der Schritt (a) durch Einführung von Fördergas durch den Boden der ersten Kammer, eine gegenüber der Trennwand liegende Seitenwand der ersten Kammer oder beides praktiziert wird.

5. Verfahren zur Beförderung von Feststoffpartikeln nach Anspruch 1, **dadurch gekennzeichnet**, daß die Schritte (a) und (b) praktiziert werden, um Feststoffpartikel aus einer Brennkammer in einer Wirbelschichtfeuerung in eine benachbarte Behandlungskammer zu transportieren, die eine Wirbelschicht aus Partikeln darin aufweist.

6. Verfahren zur Beförderung von Feststoffpartikeln nach Anspruch 1, **dadurch gekennzeichnet**, daß die Schritte (a) und (b) praktiziert werden, um Feststoffpartikel in einer Wirbelschichtfeuerung aus einer internen Wärmetauschkammer mit einer Wirbelschicht aus Feststoffpartikeln darin in eine Brennkammer zurückzuführen.

7. Verfahren zur Beförderung von Feststoffpartikeln nach Anspruch 1, **dadurch gekennzeichnet**, daß die Schritte (a) und (b) durch Beförderung von Feststoffpartikeln in einer zirkulierenden Wirbelschichtfeuerung aus einem Bett Feststoffpartikel in einem Rückführkanal (16) in die Brennkammer der Feuerung praktiziert werden.

8. Verfahren zur Beförderung von Feststoffpartikeln nach Anspruch 1, **dadurch gekennzeichnet**, daß der Schritt (b) durch Beförderung von Feststoffpartikeln in Form von mehreren Feststoffströmen durch horizontale oder geringfügig geneigte schlitzartige Kanäle praktiziert wird, welche Kanäle übereinander angeordnet sind.

9. Verfahren zur Beförderung von Feststoffpartikeln nach Anspruch 1**, dadurch gekennzeichnet**, daß der Schritt (b) durch Beförderung von Feststoffpartikeln in Form von mehreren horizontalen Feststoffströmen durch Kanäle von weniger als zirca 50 mm Höhe praktiziert wird.

10. Verfahren zur Beförderung von Feststoffpartikeln nach Anspruch 1, **dadurch gekennzeichnet**, daß der Schritt (a) durch Einführung mindestens eines Teils des Fördergases durch eine gegenüber der Trennwand in der ersten Kammer liegende Seitenwand praktiziert wird.

11. Vorrichtung zur Beförderung von Feststoffpartikeln aus einer ersten Kammer (30, 110, 216, 314 / 12, 112, 210, 310) mit Feststoffpartikeln darin in eine benachbarte zweite Kammer (12, 112, 210, 310 / 30, 110, 216, 314), welche zwei benachbarten Kammern durch eine Trennwand (20, 114, 218) voneinander getrennt sind, welche Vorrichtung Gaseinlaßmittel zur Einführung von Fördergas in die erste Kammer aufweist,
welche Vorrichtung **gekennzeichnet** ist durch
- zwei oder mehr übereinander angeordnete Kanäle in besagter Trennwand (42a - 42f, 122, 230) mit einem Höhe (h) zu Länge (l) Verhältnis (h/l) kleiner als die Tangente eines Winkels α, worin der Winkel α der maximale Winkel eines Haufens aus Feststoffpartikeln ist, bei dem sich Partikel ansammeln können, ohne daß sich Feststoffpartikel ausbreiten oder die Seiten des Haufens entlang hinabgleiten,
- eine Feststoff -Durchflußsperre, eine regelbare Feststoff-Durchflußschleuse oder beides, die von den Kanälen in der die Kammern miteinander verbindenden Trennwand gebildet werden.

12. Vorrichtung nach Anspruch 11, dadurch **gekennzeichnet**, daß die Kanäle ein Höhe (h) zu Länge (l) Verhältnis (h/l) kleiner als ungefähr 0,5 haben.

13. Vorrichtung nach Anspruch 11, dadurch **gekennzeichnet**, daß die übereinander angeordneten zwei oder mehr Kanäle in einer rahmenähnlichen Konstruktion (44) in der Trennwand zu einer kiemenartigen Konfiguration zusammengefügt sind, welche Kanäle horizontal sind und jeweils eine Höhe von weniger als ungefähr 50 mm haben.

14. Vorrichtung nach Anspruch 13, dadurch **gekennzeichnet**, daß die zwei oder mehr rahmenähnlichen Konstruktionen Seite an Seite horizontal voneinander beabstandet in der Trennwand angeordnet sind.

15. Vorrichtung nach Anspruch 14, dadurch **gekennzeichnet**, daß die Gaseinlaßmittel eine Vielzahl Fördergasdüsen (56 - 60) umfassen, die in der ersten Kammer vor den rahmenähnlichen Konstruktionen für den Transport von Feststoffpartikeln durch die Kanäle angeordnet sind.

16. Vorrichtung nach Anspruch 15, die ferner Wärmetauschflächen (120) umfaßt, die in der ersten Kammer in zu den Zwischenräumen zwischen den rahmenähnlichen Konstruktionen benachbarten Zonen angeordnet sind.

17. Vorrichtung nach Anspruch 11, dadurch **gekennzeichnet**, daß die übereinander angeordneten zwei oder mehr Kanäle zu einer kiemenartigen Konfiguration in einer rahmenähnlichen Konstruktion (44) in der Trennwand zusammengefügt sind.

18. Vorrichtung nach Anspruch 17, dadurch **gekennzeichnet**, daß die Kanäle ein Höhe (h) zu Länge (l) Verhältnis (h/l) unter zirca 0,5 haben.

19. Vorrichtung nach Anspruch 18, dadurch **gekennzeichnet**, daß die Kanäle einen Winkel von mindestens ungefähr 10 Grad gegenüber der Horizontalen bilden.

20. Vorrichtung nach Anspruch 11, dadurch **gekennzeichnet**, daß die Kanäle einen Winkel von mindestens ungefähr 10 Grad gegenüber der Horizontalen bilden.

21. Vorrichtung nach Anspruch 11, dadurch **gekennzeichnet**, daß die erste Kammer eine Brennkammer und die zweite Kammer eine Behandlungskammer ist.

22. Vorrichtung nach Anspruch 11, dadurch **gekennzeichnet**, daß die erste Kammer eine Behandlungskammer und die zweite Kammer eine Brennkammer ist.

23. Vorrichtung nach Anspruch 11, dadurch **gekennzeichnet**, daß die erste Kammer ein Rückführkanal und die zweite Kammer eine Brennkammer ist.

24. Vorrichtung nach Anspruch 11, die ferner eine dritte zur ersten und zweiten Kammer benachbarte Kammer umfaßt, welche dritte Kammer durch einen Teil derselben, die erste und zweite Kammer voneinander trennenden Trennwand, von der ersten Kammer getrennt wird, welche erste Trennwand mit Abstand zu den ersten, die erste und zweite Kammer miteinander verbindenden schmalen Kanälen zwei oder mehr schmale in der Trennwand übereinander angeordnete, die erste und dritte Kammer miteinander verbindende Kanäle hat, um eine Feststoff-Durchflußsperre, eine regelbare Feststoff-Durchflußschleuse oder beides zu bilden; welche dritte Kammer ferner von der zweiten Kammer durch eine zweite Trennwand mit einem die zweite und dritte Kammer miteinander verbindenden Kanal getrennt ist; und wobei die erste Kammer eine Brennkammer, die zweite Kammer eine Transportkammer und die dritte Kammer eine Behandlungskammer ist.

25. Vorrichtung nach Anspruch 11, dadurch **gekennzeichnet**, daß die Trennwand in der ersten Kammer feuerfest ausgemauert ist.

26. Vorrichtung nach Anspruch 25, die ferner zwei oder mehr schmale Kanäle aufweist, die in der feuerfesten Ausmauerung angeordnet und mit den schmalen Kanälen in besagter Trennwand ausgerichtet sind.

27. Vorrichtung nach Anspruch 25, dadurch **gekennzeichnet**, daß die schmalen Kanäle in der feuerfesten Ausmauerung dadurch ausgebildet sind, daß brennbares, in die Wand vor der Abdeckung mit feuerfestem Material eingesetztes Material in Form besagter Kanäle weggebrannt wird, welches brennbare Material während der Erhitzung der feuerfesten Ausmauerung weggebrannt wird und schmale Kanäle in der restlichen Wand übrigbleiben.

28. Vorrichtung nach Anspruch 11, dadurch **gekennzeichnet**, daß die Trennwand eine Membranrohrwand ist, und die zwei oder mehr Kanäle übereinander an einer Stelle in der Membranwand angeordnet sind, wo die Rohre derart gebogen sind, daß sie eine Aussparung für die zwei oder mehr Kanäle bilden.

## Revendications

1. Procédé pour transporter des particules solides depuis une première chambre (30, 110, 216, 314 / 12, 112, 210, 310) ayant des particules solides dans celle-ci, à une seconde chambre adjacente (12, 112, 210, 310 / 30, 110, 216, 314), les deux chambres adjacentes étant séparées par une cloison (20, 114, 218) présentant plusieurs passages (42a - 42f, 122, 230) disposés dans la cloison,
interconnectant les chambres, le procédé étant caractérisé par les étapes consistant à:
(a) introduire du gaz transporteur à la première chambre, et à transporter des particules solides en tant qu'écoulements en matière solide multiple de la première chambre à la seconde au travers les passages dans la cloison,
(b) empêcher, lorsque l'étape (a) est pratiquée, le reflux des gaz et des particules solides de la seconde chambre à la première chambre au travers les passages, présentant une proportion hauteur (h) - longueur (l), (h/l), dans la cloison, et établissant une écluse d'écoulement en matières soldies, et/ou une vanne d'écoulement de solides contrôlable, dans les passages (42a - 42f, 122, 230) sur la cloison en permettant la proportion (h/l) d'être inférieure à la tangente d'un angle α, dans laquelle l'angle α est l'angle maximum d'un amas de particules solides auquel les particules peuvent être recueillies sans que les solides d'étendent ou glissent vers le bas le long des côtés de l'amas.

2. Procédé de transportation des particules solides selon la revendication 1, dans lequel les étapes (a) et (b) sont pratiquées en introduisant des particules solides dans un système à lit fluidisé depuis un lit de particules soldies dans une première chambre aux particules solides à l'état fluidisé ou à l'état d'acheminement pneumatique dans la seconde chambre.

3. Procédé de transportation des particules solides selon la revendication 1, dans lequel l'étape (b) est pratiquée en transportant les particules au travers les passages étroits (42a - 42f, 122, 230) présentant une proportion hauteur (h) - longueur (l) inférieure à 0,5.

4. Procédé de transportation des particules solides selon la revendication 1, dans lequel l'étape (a) est pratiquée en introduisant du gaz transporteur par l'intermédiaire du fond de la première chambre, une paroi latérale faisant face à la cloison dans la première chambre, ou les deux.

5. Procédé de transportation des particules solides selon la revendication 1, dans lequel les étapes (a) et (b) sont pratiquées de façon à transporter des particules solides depuis une chambre de combustion dans un brûleur à lit fluidisé à une chambre de traitement adjacente ayant un lit fluidisé de particules dans celle-ci.

6. Procédé de transportation des particules solides selon la revendication 1, dans lequel les étapes (a) et (b) sont pratiquées de façon à recycler des particules solides en circulation dans un brûleur à lit fluidisé depuis une chambre d'échangeur de chaleur intérieure, présentant un lit fluidisé de particules solides dans celle-ci, à une chambre de combustion.

7. Procédé de transportation des particules solides selon la revendication 1, dans lequel les étapes (a) et (b) sont pratiquées en transportant des particules solides dans un brûleur à lit fluidisé circulant depuis un lit de particules solides dans une conduite de retour (16) à la chambre de combustion du brûleur.

8. Procédé de transportation des particules solides selon la revendication 1, dans lequel l'étape (b) et pratiquée en transportant des particules solides en tant qu'écoulements de solides multiples au travers les passages du type fente horizontalement ou légèrement inclinés, ces passages étant disposés l'un sur l'autre.

9. Procédé de transportation des particules solides selon la revendication 1, dans lequel l'étape (b) est pratiquée en transportant des particules solides en tant qu'écoulements de solides horizontaux multiples au travers les passages dont la hauteur est inférieure à 50 mm environ.

10. Procédé de transportation des particules solides selon la revendication 1, dans lequel l'étape (a) est pratiquée en introduisant au moins une portion de gaz transporteur par l'intermédiaire d'une paroi latérale opposée à la cloison dans la première chambre.

11. Dispositif pour transporter des particules solides depuis une première chambre (30, 110, 216, 314 / 12, 112, 210, 310), ayant des particules solides dans celle-ci, à une seconde chambre adjacente (12, 112, 210, 310 / 30, 110, 216, 314), les deux chambres adjacentes étant séparées par une cloison (20, 114, 218), le dispostif comportant des moyens d'admission de gaz afin d'introduire du gaz transporteur à la première chambre,
le dispositif étant caractérisé par
- deux ou plusieurs passages dans ladite cloison, l'un sur l'autre (42a - 42f, 122, 230) présentant une proportion hauteur (h) - longueur (l), (h/l), inférieure à la tangente d'un angle α, dans laquelle l'angle α et l'angle maximum d'un amas de particules solides auquel les particules peuvent être recueillies sans que les solides d'étendent ou glissent vers le bas le long des côtés de l'amas,
- une écluse d'écoulement des solides, une vanne d'écoulement de solides contrôlable, ou les deux, prévues par les passages dans ladite cloison interconnectant lesdites chambres.

12. Dispositif selon la revendication 11, dans lequel lesdits passages présentent une proportion hauteur (h) - longueur (l), (h/l), inférieure à 0,5 environ.

13. Dispositif selon la revendication 11, dans lequel lesdits deux ou plusieurs passages superposés sont combinés en une configuration commune du type branchies dans une construction du type cadre (44) dans ladite cloison, lesdits passages étant horizontaux et chacun présentant une hauteur inférieure à 50 mm environ.

14. Dispositif selon la revendicatin 13, dans lequel deux ou plusieurs desdites constructions du type cadre sont disposées côte à côte, espacées horizontalement les unes des autres, dans ladite cloison.

15. Dispositif selon la revendication 14, dans lequel ledit moyen d'admission de gaz comprend une pluralité de buses de gaz transporteur (56 - 60) disposées dans ladite première chambre devant lesdites constructions du type cadre afin de transporter des particules solides au travers lesdits passages.

16. Dispositif selon la revendication 15 comprenant, en outre, des surfaces thermoconductrices (120) disposées dans ladite première chambre en zones adjacentes intervenant les espaces entre lesdites constructions du type cadre.

17. Dispositif selon la revendication 11, dans lequel lesdits deux ou plusieurs passages superposés sont combinés en une configuration commune du type branchies dans une construction du type cadre (44) dans ladite cloison.

18. Dispositif selon la revendication 17, dans lequel lesdits passages présentent une proportion hauteur (h) - longueur (l), (h/l), inférieure à 0,5.

19. Dispositif selon la revendication 18, dans lequel lesdits passages forment un angle d'au moins de l'ordre de 10 degrés par rapport à l'horizontale.

20. Dispositif selon la revendication 11, dans lequel lesdits passages forment un angle d'au moins de l'ordre de 10 degrés par rapport à l'horizontale.

21. Dispostif selon la revendication 11, dans lequel ladite première chambre est une chambre de combustion et ladite seconde chambre une chambre de traitement.

22. Dispositif selon la revendication 11, dans lequel ladite première chambre est une chambre de traitement et ladite deuxième chambre une chambre de combustion.

23. Dispositif selon la revendication 11, dans lequel ladite première chambre est une conduite de retour et ladite seconde chambre une chambre de combustion.

24. Dispositif selon la revendication 11 comprenant en outre une troisième chambre adjacente auxdites première et secondes chambres, ladite troisième chambre étant séparée de la première chambre par une portion de la même première cloison qui sépare lesdites première et seconde chambres, ladite première cloison étant à l'écart desdits premiers passages étroits interconnectant les première et seconde chambres, deux ou plusieurs passages étroits étant superposés dans ladite première cloison interconnectant lesdites première et troisième chambres afin de procurer une écluse d'écoulement de solides, une vanne d'écoulement des solides contrôlable, ou les deux; ladite troisième chambre étant en outre séparée de la seconde chambre par une seconde cloison comportant un passage interconnectant lesdites seconde et troisième chambres; et dans lequel ladite première chambre comprend une chambre de combustion, ladite seconde chambre comprend une chambre de transportation et ladite troisième chambre une chambre de traitement.

25. Dispositif selon la revendication 11, dans lequel ladite cloison à l'intérieur de ladite première chambre possède un garnissage réfractaire.

26. Dispositif selon la revendication 25 comprenant en outre deux ou plusieurs passages étroits disposés dans ledit garnissage réfractaire en alignement avec lesdits passages étroits dans ladite cloison.

27. Dispositif selon la revendication 25, dans lequel lesdis passages étroits dans ledit garnissage réfractaire sont réalisés en consumant par le feu de la matière combustible sous la forme desdits passages, insérés dans la paroi avant qu'elle soit recouverte de garnissage réfractaire, la matière combustible étant détruite par le feu au cours du chauffage du garnissage réfractaire et laissant les passages étroits dans la paroi restante.

28. Dispositif selon la revendication 11, dans lequel ladite cloison est une membrane en tubes, et lesdits deux ou plusieurs passages superposés sont disposés dans la membrane à l'emplacement où les tubes sont courbés afin d'obtenir une ouverture pour lesdits deux ou plusieurs passages.
